# EUROPEAN PATENT APPLICATION

(11) **EP 1 564 189 A1**
(43) Date of publication of application: **17.08.2005**
(21) Application number: 04020842.3
(22) Date of filing: 02.09.2004
(51) Int. Cl.: C03B 37/016, C03C 1/00, C04B 35/634

(54) **Method for manufacturing preform for photonic crystal fiber**

(30) Priority: 11.02.2004 KR 2004009040
(71) Applicant: Samsung Electronics Co., Ltd., Suwon-si, Gyeonggi-do (KR)
(72) Inventor: Oh, Jeong-Hyun, Samsung Electronics Co., Ltd, Suwon-city Kyugki-do (KR); Baik, Young-Min, Samsung Electronics Co., Ltd, Suwon-city Kyugki-do (KR); Kim, Jin-Han, Samsung Electronics Co., Ltd, Suwon-city Gyeonggi-do (KR)
(74) Representative: Lang, Johannes, Dipl.-Ing.

(57) **Abstract**

Disclosed is a method for manufacturing a preform for a photonic crystal fiber (PCF). The method includes the steps of (A) forming a dry gel having a cylindrical shape by forming a silica slurry obtained by mixing a monomer and a dimer and drying the slurry, and (B) forming air holes e.g. by drilling, having the desired size and arrangement through the dry gel, thereby easily regulating the size and arrangement of the air holes and manufacturing various shapes of the preform.

## Description

### BACKGROUND OF THE INVENTION

### 1. Field of the Invention

The present invention relates to a method for manufacturing a preform for a photonic crystal fiber.

### 2. Description of the Related Art

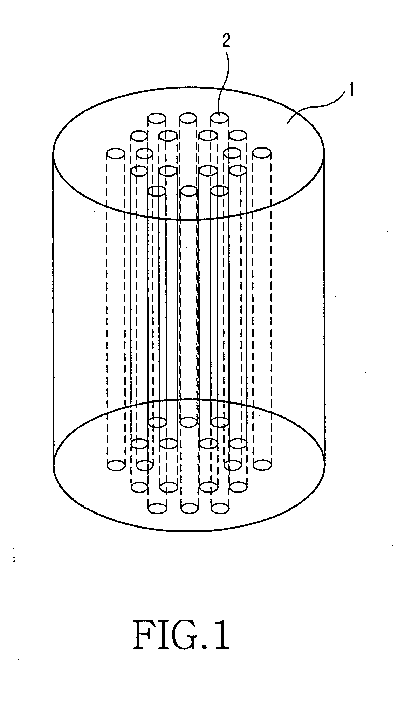

A single-mode optical fiber, defining a core member of a fiber, is typically made by adding Germanium or Phosphorus to glass. For example, as shown in Fig. 1, a photonic crystal fiber (PCF) is made of a transparent material 1, such as fused silica glass. Regularly-arranged air holes 2 are formed throughout the transparent material 1 in a longitudinal direction so that the air holes 2 are running parallel along the axis of a fiber.

In the PCF, a photon transition layer is made using the difference in dielectric constants between an air layer and a silica glass layer. In the same manner as an electronic band gap in a semiconductor, such a photon transition layer has a photonic stop band against a designated wavelength or optical traveling direction. That is, only light satisfying the requirements of the photon transition layer passes through the photon transition layer. The traveling of light in the PCF is achieved by a Photonic Band-gap Effect and an Effective Index Effect, and is readily disclosed in detail by T.A. Birks, et al., Electronic Letters, Vol.31(22) p. 1941(October 1995) and J.C. Knight, et al., OFC, Vol.4 p.114 (February, 1999).

The PCF has many desirable technical characteristics to be used in optical communication fields. For example, the PCF supports a single mode throughout a broad wavelength and has a large mode region which in turn enables the PCF to transmit a signal having high optical power and representing a high phase separation at the wavelength of 1.55 µm. Further, the PCF increases/decreases the nonlinearity and thus can be used as a polarized light-regulating device. Accordingly, it is expected that the PCF having the above-described characteristics will be widely applied to optical communication fields.

In the conventional techniques of manufacturing a preform to produce the PCF, capillary glass tubes and glass rods are stacked and bound into a bundle having the desired shape to produce an optical preform. However, the conventional techniques require workers to manually assemble the elements into the preform which tend to generate contaminants and require a repetitive washing step. Moreover, when the PCF having a porous structure is drawn from the preform, air holes disposed on the outside area of the preform are remarkably reduced or clogged as opposed to air holes disposed on the inside area of the preform. Comparatively large-sized inside air holes are deformed into oval shapes. This is mainly because tubular members disposed on the outside area of the preform melt faster than tubular members disposed on the inside the preform due to the difference of heat conductivity between the inside and the outside of the perform areas.

The above deformation of the air holes, generated when the PCF is drawn from the preform, causes a difficulty in manufacturing a large amount of the PCF having the porous structure continuously.

According to another conventional technique, a cylindrical silica glass is perforated so that air holes are formed through the silica glass. This technique is disadvantageous in that the silica glass has a high level of hardness, thereby having a difficulty in forming the air holes through the silica glass.

### SUMMARY OF THE INVENTION

Therefore, the present invention has been made in light of the above problems and provides additional advantages, by providing a method of manufacturing a preform to produce a photonic crystal fiber, and this improved method prevents the contamination and simplicity in the arrangement of air holes in the preform.

Another aspect of the present invention is to provide a method for manufacturing a preform to produce a photonic crystal fiber, and the method prevents deformation and size reduction of air holes generated when the optical fiber is drawn.

In one embodiment, a method for manufacturing a preform used to produce a photonic crystal fiber (PCF) includes the steps of: (A) forming a dry gel having a cylindrical shape by molding silica slurry obtained by mixing a monomer and a dimer and drying the slurry; and (B) forming air holes having the desired size and arrangement through the dry gel.

Preferably, the step (A) may include the sub-steps of: (a) preparing a premix solution by mixing the monomer and the dimer in deionized water; (b) forming a sol by adding a fuming silica and a dispersing agent to the premix solution; (c) removing bubbles from the sol and maturing the sol; (d) injecting the matured sol into a mold having a designated shape, and gelling the sol by adding a polymerization initiator and a catalyzer to the sol; (e) maturing the obtained gel so that the intensity of the gel is increased; (f) separating a wet gel, obtained by completing the gelation, from the mold; and, (g) forming a dry gel by drying the wet gel separated from the mold.

More preferably, the method may further comprise (C) vitrifying the dry gel provided with the air holes by sintering the dry gel.

### BRIEF DESCRIPTION OF THE DRAWINGS

The above features and other advantages of the present invention will be more clearly understood from the following detailed description taken in conjunction with the accompanying drawings, in which:
- Fig. 1: is a view illustrating the structure of a conventional preform for a photonic tonic crystal fiber; and
- Fig. 2: is a flow chart illustrating the process of manufacturing a preform for a photonic crystal fiber in accordance with an embodiment of the present invention.

### DETAILED DESCRIPTION

Now, embodiments of the present invention will be described in detail with reference to the annexed drawings. For the purposes of clarity and simplicity, a detailed description of known functions and configurations incorporated herein will be omitted as it may make the subject matter of the present invention unclear.

A method of manufacturing a preform to be used to produce a photonic crystal fiber (PCF) in accordance with the present invention is characterized in that a silica slurry obtained by mixing a monomer and a dimer is formed into a cylindrical shape and then dried to form a cylindrical dry gel, thus allowing air holes having the desired size and arrangement to form using the dry gel via a mechanical process, such as drilling.

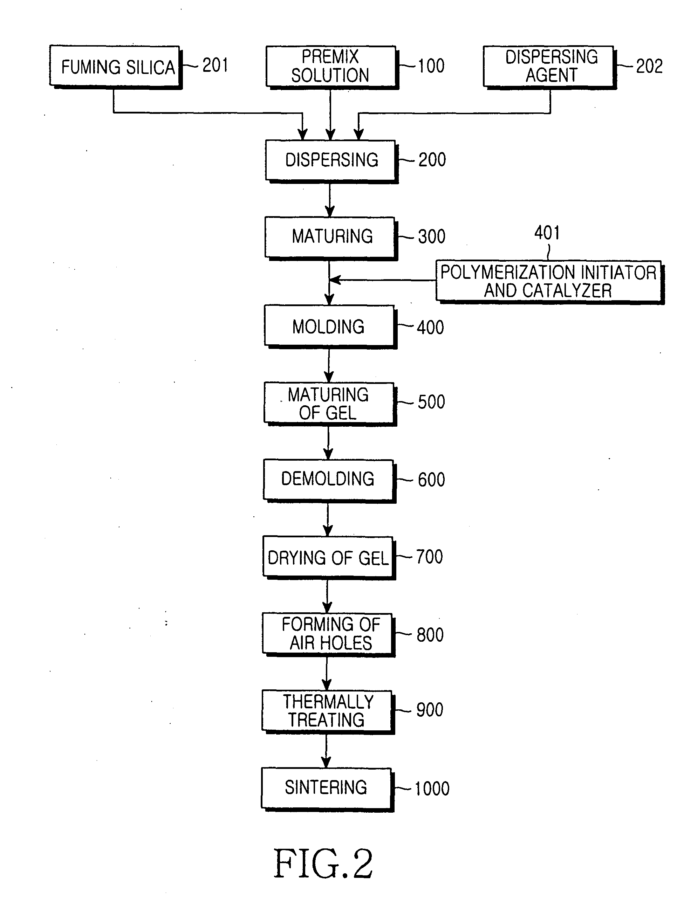

Fig. 2 is a flow chart illustrating the process for manufacturing a preform for a photonic crystal fiber in accordance with an embodiment of the present invention. As shown, the method includes the steps of preparing a premix solution (S100), dispersing (S200), maturing (S300), molding (S400), maturing a gel (S500), demolding (S600), drying the gel (S700), drilling (S800), thermal treating (S900), and sintering (S1000).

In S100, a premix solution is made by dissolving a monomer, such as acrylamide, methacrylamide or 1-vinyl-2-pyrrolidinone, and a dimer, such as N,N'-methylenebisacrylamide, in distilled water.

In S200, a fuming silica 201 and a dispersing agent 202 are mixed/dispersed with the premix solution prepared in S100, thus generating a slurry. Here, the fuming silica 201 (for example, aerosil-OX50 produced by DEGUSSA) has an amount of 40∼60 % by weight, and tetramethylammonium hydroxide (hereinafter, referred to as "TMAH" ) is used as the dispersing agent 202. The dispersing agent 202 regulates the basicity (pH) of the obtained mixture to 11 to 13, thus improving the dispersion of the fuming silica 201.

In step 300, air is removed from the obtained sol in a dispersed state using a vacuum pump, and the sol is matured for a designated time (within approximately 15 hours) so that silica particles in the sol are stabilized.

In step 400, the sol having passed through step S300 is injected into a mold having a predetermined shape, and a polymerization initiator and a catalyzer 401 are added to the sol, thereby converting the sol into a gel state. The polymerization initiator and the catalyzer 401 serve to polymerize the monomer and the dimer added to the premix solution. An aqueous ammonium persulfate solution is used as the polymerization initiator, and N,N,N',N'- tetramethylethylenediamine (hereinafter, referred to as "TEMED") is used as the catalyzer 401.

In step 500, the gel having passed through step S400 is matured at room temperature so that the intensity of the gel is strengthened.

In step 600, the obtained wet gel is removed from the mold. Here, the central rod of the mold is removed from the main body of the mold, and then the wet gel is removed from the main body of the mold.

In step 700, the wet gel removed from the main body of the mold is dried in a thermohydrostat maintained under the conditions of 20∼50°C and RH 70∼95% for a week, thereby being converted into a dry gel state.

In step 800, air holes having the desired size and arrangement are formed through the dry gel by using a lathe or employing a drilling method.

In step 900, the obtained dry gel is thermally treated at the temperature in the range of 300∼700°C so as to remove the moisture and the organic compounds remaining in the dry gel. Thereafter, chlorine gas is supplied to the gel and then the gel is thermally treated again at the temperature in the range of 300∼1,200°C so as to remove OH radicals remaining in the dry gel.

In step 1000, the dry gel is thermally treated under the condition that helium gas is supplied to the dry gel or under the vacuum. Thereby, a high-purity preform for a photonic crystal fiber without bubbles is manufactured.

### Example 1

TMAH 25wt% solution in an amount of 375cc is mixed to a premix solution obtained by mixing 1-vinyl-2-pyrrolidinone in an amount of 108g and N,N'- methylenebisacrylamide in an amount of 12g in deionized water in an amount of 2.825g. Then, aerosil-OX50 (produced by DEGUSSA) in an amount of 3,000g is introduced into the obtained mixture and dispersed in a high-shear mixer, thus forming a slurry in the mixture.

The obtained slurry is injected into a SUS tube mold having an inner diameter of 124 mm and a length of 500 mm, thereby being molded. The molded slurry is gelled within one hour, and is then matured for five hours. After maturing, the central rod of the mold is removed downward perpendicularly from the main body of the mold, and the obtained gel is removed from the SUS tube mold and dried in the thermohydrostat maintained under the conditions of a temperature of 30°C and a moisture of 70% for seven days. Thereinafter, air holes having a diameter of 4 mm are formed through the dry gel by a drilling method.

In order to remove organic compounds contained in the gel, the gel is heated at the rate of 50°C/hr up to a temperature of 550°C, and is maintained at the temperature of 550°C for 5 hours. The above steps for removing moisture and organic compounds are continuously performed in the same chamber. Then, in order to achieve vitrification of the gel, the gel is heated at the rate of 100°C/hr up to a temperature of 1,000°C and maintained at the temperature of 1,000°C for 5 hours. Here, OH radicals are moved from the gel by regulating the atmosphere using chlorine gas. The gel is sintered at the rate of 100°C/hr up to a temperature of 1,500°C under the atmosphere of He gas. As a result, a high-purity silica glass preform is manufactured.

The vitrified preform has a diameter of 80 mm and a length of 270 mm. The air holes formed in the preform have the diameters of 3 mm, and the distance between the neighboring air holes is 4.5 mm.

### Example 2

The obtained gel is sintered under the vacuum atmosphere. Here, the sintering of the gel is performed at a temperature of 1,500°C and the vacuum degree is 1Torr. Other steps of Example 2 are the same as those of Example 1, thus omitted to avoid redundancy.

As apparent from the above description, the present invention provides a method for manufacturing a preform for a photonic crystal fiber using silica slurry obtained by mixing a monomer and a dimer, thereby easily regulating the size and arrangement of air holes formed in the preform and having various shapes of the preform. Further, in accordance with the present invention, it is possible to manufacture a large-sized preform without the probability of contamination.

Although a preferred embodiment of the present invention have been described in detail, those skilled in the art will appreciate that various modifications, additions, and substitutions to the specific elements are possible, without departing from the scope and spirit of the invention as disclosed in the accompanying claims.

## Claims

1. A method for manufacturing a preform for a photonic crystal fiber (PCF) comprising the steps of:
(A) forming a dry gel having a cylindrical shape by molding silica slurry obtained by mixing a monomer and a dimer, and drying the slurry; and
(B) forming air holes having a predetermined size and arrangement through the dry gel.

2. The method as set forth in claim 1, further comprising the step of (C) vitrifying the dry gel provided with the air holes by sintering the dry gel.

3. The method as set forth in claim 1, further comprising the step of (D) thermally treating the dry gel to remove moisture and impurities from the dry gel after step (B).

4. The method as set forth in claim 1, wherein step (A) includes the sub-steps of:
(a) preparing a premix solution by mixing the monomer and the dimer in deionized water;
(b) forming a sol by adding a fuming silica and a dispersing agent to the premix solution;
(c) removing bubbles from the sol and maturing the sol;
(d) injecting the matured sol into a mold having a predetermined shape, and gelling the sol by adding a polymerization initiator and a catalyzer to the sol;
(e) maturing the gel so that the intensity of the gel is increased;
(f) separating a wet gel, obtained by completing the gelation, from the mold; and,
(g) forming a dry gel by drying the wet gel separated from the mold.

5. The method as set forth in claim 1, wherein step (B) is achieved by a mechanical perforating method such as drilling.

6. The method as set forth in claim 2, further comprising the step of (C) vitrifying the dry gel provided with the air holes by sintering the dry gel.

7. The method as set forth in claim 2, wherein the monomer is one selected from the group consisting of acrylamide, methacrylamide, and 1-vinyl-2-pyrrolidinone.

8. The method as set forth in claim 2, wherein the dimer is N,N'- methylenebisacrylamide.

9. The method as set forth in claim 2, wherein the fuming silica in step (b) has an amount of 40∼60 % by weight.

10. The method as set forth in claim 2, wherein the dispersing agent in step (b) regulates the basicity (pH) the premix solution to 11 to 13.

11. The method as set forth in claim 2, wherein the polymerization initiator in the step (d) is an aqueous ammonium persulfate solution.

12. The method as set forth in claim 2, wherein the catalyzer in step (d) is N,N,N',N'-tetramethylethylenediamine (TEMED).

13. The method as set forth in claim, further comprising the step of (D) thermally treating the dry gel to remove moisture and impurities from the dry gel after step (B).

14. The method as set forth in claim 13, wherein the step (D) is performed in the same chamber in an in-situ state.

15. A method for manufacturing a preform for a photonic crystal fiber (PCF) comprising the steps of:
(a) preparing a premix solution by mixing the monomer and the dimer in deionized water;
(b) forming a sol by adding fuming silica and a dispersing agent to the premix solution;
(c) removing bubbles from the sol and maturing the sol;
(d) injecting the matured sol into a mold having a designated shape, and gelling the sol by adding a polymerization initiator and a catalyzer to the sol;
(e) maturing the gel so that the intensity of the gel is increased;
(f) separating a wet gel, obtained by completing the gelation, from the mold;
(g) forming a dry gel by drying the wet gel separated from the mold;
(h) forming air holes having a desired size and arrangement through the dry gel; and,
(i) vitrifying the dry gel provided with the air holes by sintering the dry gel.

16. The method as set forth in claim 15, wherein step (e) is performed at room temperature.

17. The method as set forth in claim 15, wherein the air holes in step (h) are formed by using a lathe or a drilling method.
